# EUROPÄISCHE PATENTSCHRIFT

(11) **EP 0 866 093 B1**
(45) Veröffentlichungstag und Bekanntmachung des Hinweises auf die Patenterteilung: **05.12.2001**
(21) Anmeldenummer: 98104420.9
(22) Anmeldetag: 12.03.1998
(51) Int. Cl.: C08K 5/00, C08J 3/22, C08L 101/00

(54) **Feste, lagerstabile Antistatika-Mischungen und Verfahren zu ihrer Herstellung**
Solid, storage stable antistaticts mixtures and process for their production
Mélanges d'agents antistatiques solides et stables au stockage ainsi que leur procédé de fabrication

(30) Priorität: 21.03.1997 DE 19711814
(43) Veröffentlichungstag der Anmeldung: 23.09.1998
(73) Patentinhaber: Clariant GmbH, 65929 Frankfurt am Main (DE)
(72) Erfinder: Breitwieser, Michael, 86169 Augsburg (DE)

(56) Entgegenhaltungen:
- EP-A- 0 215 444
- EP-A- 0 259 960
- EP-A- 0 492 463
- DATABASE WPI Section Ch, Week 7516 Derwent Publications Ltd., London, GB; Class A17, AN 75-26626W XP002071212 & JP 50 005 438 A (CHISSO CORP)

## Beschreibung

Die Erfindung betrifft feste, lagerstabile Antistatika-Mischungen, die Vorteile bei der Handhabung solcher Antistatika besitzen und sich synergistisch in ihrer antistatischen Wirkung verstärken, sowie ein Verfahren zu ihrer Herstellung.

Hohe Durchgangs- und spezifische Oberflächenwiderstände haben Kunststoffen einen bedeutenden Platz als isolierende Werkstoffe auf dem Elektro- und Elektroniksektor verschafft. Die gleichen strukturbedingten Eigenschaften führen jedoch bei allen Trennvorgängen von anderen Medien zu einer starken elektrostatischen Aufladung der Oberfläche. Dies ist jedoch aus verschiedenen Gründen unerwünscht und deshalb versucht man, durch geeignete Additive die Aufladbarkeit der Kunststoffe zu vermindern.

Als Antistatika zur Verhinderung der statischen Aufladung bei Thermoplasten werden seit langem Fettsäureglyceride eingesetzt, im wesentlichen Glycerinmonostearat (GMS), aber auch Glyceride auf Basis anderer Fettsäuren. Diese Monoglyceride können in reiner Form vorliegen, sie können aber auch mehr oder weniger große Anteile an Di- und Triglyceriden enthalten. GMS wird bisweilen als alleiniges Antistatikum in Rezepturen für thermoplastische Formmassen eingesetzt (vgl. z.B. JP 04103667 und JP 58059245) jedoch weitaus häufiger in Mischung mit weiteren Antistatika, mit Alkansulfonsäuren und deren Salzen (JP 05017696) oder mit bestimmten sekundären Aminen (JP 57031942). JP 01141932 beschreibt die Vorteile einer ternären Kombination von Fettsäureglyceriden mit Fettsäureaminethoxylaten und Fettalkoholen. Vielfach werden GMS oder andere Fettsäureglyceride zusammen mit Alkylamin- und Alkylamidethoxylaten eingesetzt (JP 05239445, EP-A-492463, JP 63056545).

Insbesondere ist die Anwendung von GMS in Polypropylen weit verbreitet, denn es ist bekannt, daß sich GMS auf die Verfärbungsneigung von PP bei der Verarbeitung positiv auswirkt (JP 58079042). GMS zeichnet sich als Antistatikum auch durch seine sehr rasche Wirkung aus. Ein Nachteil von GMS ist jedoch, daß die antistatische Wirkung nicht dauerhaft erhalten bleibt. Gewöhnlich findet man 2-3 Wochen nach der Formgebung eine Abnahme des antistatischen Effektes, der sich nach etwa 5 Wochen dem Niveau einer nicht ausgerüsteten Formmasse annähert.
Ethoxylierte Fettamine sind ebenfalls sehr weit verbreitete Antistatika, die insbesondere zur dauerhaften antistatischen Ausrüstung von Polyolefinen eingesetzt werden. Die eingesetzten Fettamine sind jedoch meist Flüssigkeiten, beispielsweise ethoxyliertes Cocosfettalkylamin (2,2'-Bishydroxyethyl C₁₂-C₁₄- Alkylamin), seltener Feststoffe, häufig wachsartig. Ethoxyliertes Talgfettalkylamin (2,2'-Bishydroxyethyl C₁₆-C₁₈-Alkylamin) ist von wachsartiger Konsistenz. Das ethoxylierte Cocosfettalkylamin hat aufgrund des geringeren Molgewichts eine höhere Diffusionsgeschwindigkeit in der Kunststoffmatrix und gelangt daher schneller als das ethoxylierte Talgfettamin an die Oberfläche der Formmasse und ist daher im allgemeinen auch schneller wirksam.

Solche Additive, die flüssig oder halbfest sind, können bei vielen Kunststoffverarbeitern nicht angewendet werden. Darum erfolgt die antistatische Ausrüstung bei dem Verarbeiter durch die Verwendung von Masterbatches, die das ethoxylierte Amin eingearbeitet in ein granulatförmiges Polymer enthalten. So offenbart EP-A-259 960 ein Polymerkonzentrat, in das alkoxylierte Amine und Fettsäureglyceride eingearbeitet sind. Die Herstellung solcher Masterbatches ist mit flüssigen Additiven aufwendig, denn die Flüssigkeit muß durch eine Flüssigdosiervorrichtung in die Schmelze eingepumpt werden. Es ist auch bekannt, daß sich diese Additive nur zu einem bestimmten Anteil in Masterbatches einarbeiten lassen. Bei konventionellen Masterbatches liegt die Grenze für ethoxyliertes Amin praktisch bei 10 %. Bereits bei einer Dosierung von 5 % im Masterbatch tritt das Additiv im Laufe der Zeit aus und erschwert damit die Handhabung, Lagerung und begrenzt die Lagerdauer. Dem allgemeinen Trend, an Wirkstoffen hochkonzentrierte Masterbatches und Wirkstoffkonzentrate herzustellen, ist damit bei flüssigen ethoxylierten Aminen eine relativ niedrige Obergrenze gesetzt.

Es werden zwar ethoxylierte Amine in fester Form auf dem Markt angeboten, beispielsweise in Mischung mit Calciumstearat. Dabei müssen jedoch höhere Mengen solcher Konfektionshilfsmitteln eingesetzt werden, um eine ausreichende Rieselfähigkeit zu erhalten.

Es stellte sich daher die Aufgabe, für die alkoxylierten Amine feste Zubereitungsformen zu entwickeln, die pulverförmig sind und während der Lagerung, Transport und Handhabung ihre Form behalten und einen hohen Anteil an diesen alkoxylierten Aminen aufweisen.

Überraschenderweise wurde gefunden, daß man durch Mischung von alkoxylierten Aminen mit flüssigen oder wachsartigen Fettsäureglyceriden feste, somit also leicht konfektionierbare, und lagerstabile Kunststoffadditive mit antistatischer Wirkung erhält.

Durch separates Vormischen nur dieser vorgenannten Bestandteile, gegebenenfalls in Verbindung mit weiteren Verfahrensschritten, erhält man, im Gegensatz zu dem üblichen Verfahren des Zusammenmischens mehrerer Additive oder auch aller Additive, die später in das Polymer eingearbeitet werden sollen, die erwähnte vorteilhafte Konfektionierform.

Gegenstand der Erfindung sind somit feste, lagerstabile Antistatika-Mischungen, bestehend aus alkoxylierten Aminen der Formel (I) und Fettsäureglyceriden der Formel (II)

R¹-N-[(CₙH₂ₙ)-OH]₂ (I)

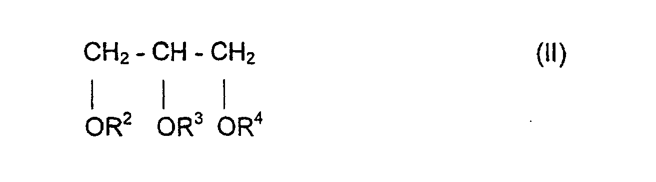

wobei n 2 oder 3, vorzugsweise 2 ist, R¹ C₈-C₂₂-Alkyl oder -Alkenyl, vorzugsweise C₁₂-C₁₈-Alkyl oder-Alkenyl, oder C₈-C₂₂-, vorzugsweise C₁₂-C₁₈-Alkyl-CO- ist und R², R³ und R⁴ gleich oder verschieden sein können und C₈-C₂₂-Alkyl-CO oder -Alkenyl-CO, vorzugsweise C₁₂-C₁₈-Alkyl-CO oder-Alkenyl-CO und zwei dieser Reste auch Wasserstoff darstellen,
wobei das Mischungsverhältnis der Verbindungen der Formeln I und II von 4:1 bis 1:10, vorzugsweise 1:2 bis 1:6 und insbesondere 1:3,5 bis 1:4,5 Gewichtsteilen beträgt.

Die erfindungsgemäßen Mischungen sind bei Raumtemperatur fest und somit gut handhabbar und bieten beispielsweise als Pulver oder Granulat, das lagerstabil ist und nicht zusammenbäckt, dem Verarbeiter von Kunststoffen einen erheblichen technischen Vorteil, da u.a. die beschriebenen Nachteile der Verwendung von Masterbatches entfallen. Die Notwendigkeit weiterer Zusatzstoffe, die keine antistatische Wirkung zeigen, entfällt. Ferner zeigt die erfindungsgemäße Mischung eine synergistische Antistatikwirkung im Vergleich zu den Einzelkomponenten.

Bei den Verbindungen der Formel II sind solche bevorzugt, bei denen nur ein Alkyl- bzw. Alkenyl-CO-rest vorhanden ist, d.h. entweder R², R³ oder R⁴ Alkyl-CO oder Alkenyl-CO entsprechend der oben angegebenen Defintion bedeutet und die beiden restlichen Symbole Wasserstoff darstellen.

Gegenstand der Erfindung ist weiterhin ein Verfahren zur Herstellung von festen, lagerstabilen Antistatika-Mischungen, dadurch gekennzeichnet, daß alkoxylierte Amine der Formel (I) und Fettsäureglyceride der Formel (II)

R¹-N-[(CₙH₂ₙ)-OH]₂ (I)

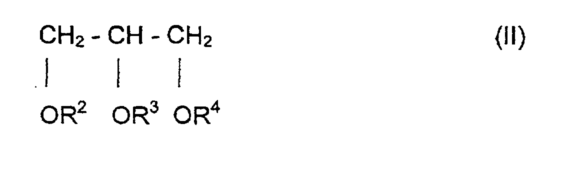

wobei n 2 oder 3, vorzugsweise 2 ist, R¹ C₈-C₂₂-Alkyl oder -Alkenyl, vorzugsweise C₁₂-C₁₈-Alkyl oder -Alkenyl, oder C₈-C₂₂-, vorzugsweise C₁₂-C₁₈-Alkyl-CO- ist und R², R³ und R⁴ gleich oder verschieden sein können und Wasserstoff, C₈-C₂₂-Alkyl-CO oder -Alkenyl-CO, vorzugsweise C₁₂-C₁₈-Alkyl-CO oder -Alkenyl-CO darstellen, im Verhältnis von 4:1 bis 1:10, vorzugsweise 1:2 bis 1:6 und insbesondere 1:3,5 bis 1:4,5 Gewichtsteilen gemischt und bei Bedarf weiteren Verfahrensschritten unterzogen werden.

Das erfindungsgemäße Verfahren umfaßt in der Regel die Verfahrensschritte des Mischens der beiden Komponenten und des Erhitzens, bis man eine homogene Schmelze erhält, was im allgemeinen unter 200°C, vorzugsweise bei 150°C, besonders bei ca. 90°C erfolgt.
In einem weiteren Verfahrensschritt kann diese Schmelze dann beispielsweise über eine Schmelzesprühvorrichtung zu einem Sprühpulver weiterverarbeitet werden oder nach dem Abkühlen bzw. Erstarren in der Masse zerkleinert werden, z.B. durch eine Schneidmühle.
Möglich sind auch andere Konfektioniermethoden, beispielsweise mittels Extruder (mit Kopfabschlag), Kollergang mit Lochplatte, Schuppenwalze, Tropfband usw.
In Einzelfällen, beispielsweise bei einer Mischung aus N-Bis-hydroxyethyl-talgfettamin und einem GMS-Typ, der 55 % Monostearat enthält, genügt auch eine rein physikalische Mischung beider Komponenten.

Die nach dem erfindungsgemäßen Verfahren hergestellten Antistatika-Mischungen können nach den üblichen Methoden in die Kunststoff-Formmassen eingearbeitet werden. Dies kann beispielsweise durch Einmischen der erfindungsgemäß erhaltenen Mischung und gegebenenfalls weiterer Additive in die Schmelze vor oder während der Formgebung erfolgen. Auch kann die Mischung in gelöster oder dispergierter Form direkt auf das Polymere aufgebracht werden oder zu einer Lösung, Suspension oder Emulsion des Polymeren zugegeben werden. Die dem Polymeren zuzusetzende Menge der Mischung beträgt 0,01 bis 6, vorzugsweise 0,06 bis 4, insbesondere 0,1 bis 3 Gew.-%, bezogen auf das auszurüstende Material. Die Mischung kann auch in Form eines Masterbatches oder Additivkonzentrates, welches 2,5 bis 70 Gew.-% der Mischung enthält, dem auszurüstenden Polymeren zugesetzt werden.

Zusätzlich kann die Kunststoff-Formmasse die üblichen Zusatzstoffe wie beispielsweise Antioxidantien, Weichmacher, Schlagzähmodifikatoren,
Verarbeitungshilfsmittel und Stabilisatoren, Lichtschutzmittel, Gleitmittel, Füllstoffe, Flammschutzmittel, Treibmittel, Pigmente, Farbstoffe oder Färbemittel sowie andere Antistatika enthalten. Hierzu wird ausdrücklich auf EP-A-0 742 254, Seite 3, Zeile 31 bis Seite 8, Zeile 17 verwiesen.

In der folgenden Übersicht sind einige thermoplastische oder duroplastische organische Polymere aufgezählt aus denen die Kunststoff-Formmassen bestehen können, die mit den erfindungsgemäß hergestellten Mischungen ausgerüstet werden können:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbomen.
2. Mischungen der unter 1) genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-lsobutylen-Copolymere, Ethylen-Buten-1-Copolymere, Propylen-Butadien-Copolymere, Isobutylen-lsopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (lonomere), sowie Terpolymere von Ethylen mit Propylen und einem Dien, wie Hexadien, Dicyclopentadien oder Ethylidennorbomen.
4. Polystyrol, Poly(p-methylstyrol).
5. Copolymere von Styrol oder α-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren; sowie Block-Copolymere des Styrols, wie beispielsweise Styrol-Butadien-Styrol, Styrol-lsopren-Styrol, Styrol-Ethylen/Butylen-Styrol oder Styrol-Ethylen/Propylen-Styrol.
6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und Alkylacrylate oder Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die beispielsweise als sogenannte ABS-, MBS-, ASA- oder AES-Polymere bekannt sind.
7. Polyvinylchlorid.
8. Mischpolymerisate des Vinylchlorids, welche durch die bekannten Verfahren hergestellt werden können (beispielsweise Suspensions-, Masse- oder Emulsionspolymerisation).
9. Mischpolymere des Vinylchlorids mit bis zu 30 Gew.-% an Comonomeren, wie beispielsweise Vinylacetat, Vinylidenchlorid, Vinylether, Acrylnitril, Acrylsäureester, Maleinsäuremono- oder -diester oder Olefinen, sowie Pfropfpolymerisate des Vinylchlorids.
10. Halogenhaltige Polymere, wie beispielsweise Polychloropren, Chlorkautschuk, chloriertes oder chlorsulfoniertes Polyethylen, Epichlorhydrin-homo- und - copolymere, insbesondere Polymere aus halogenhaltigen Vinylverbindungen, wie beispielsweise, Polyvinylidenchlorid, Polyvinylfluorid, Polyvinylidenfluorid; sowie deren Copolymere wie von Vinylchlorid-Vinylidenchlorid, Vinylchlorid-Vinylacetat oder Vinylidenchlorid-Vinylacetat.
11. Polymere, die sich von α-β-ungesättigten Säuren und deren Derivaten ableiten, wie Polyacrylate und Polymethacrylate, Polyacrylamide und Polyacrylnitrile.
12. Copolymere der unter 11) genannten Monomeren untereinander oder mit anderen ungesättigten Monomeren, wie beispielsweise Acrylnitril-Butadien-Copolymere, Acrylnitril-Alkylacrylat-Copolymere, Acrylnitril-Alkoxyacrylat-Copolymere, Acrylnitril-Vinylhalogenid-Copolymere oder Acrylnitril-Alkylmethacrylat-Butadien-Copolymere.
13. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.
14. Homo- und Copolymere von cyclischen Ethem, wie Polyethylenglykole, Polyethylenoxyd, Polypropylenoxyd oder deren Copolymere mit Bisglycidylethem.
15. Polyacetale, wie Polyoxymethylen, sowie solche Polyoxymethylene, die Comonomere wie beispielsweise Ethylenoxyd enthalten.
16. Polyphenylenoxyde und -sulfide und deren Mischungen mit Styrolpolymeren.
17. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Prepolymere).
18. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6.6, Polyamid-6.10, Polyamid-11, Polyamid-12, Poly-2,4,4-trimethylhexamethylenterephthalamid, Poly-m-phenylenisophthalamid, sowie deren Copolymere mit Polyethern, wie beispielsweise mit Polyethylenglykol, Polypropylenglykol oder Polytetramethylenglykol.
19. Polyharnstoffe, Polyimide und Polyamid-imide.
20. Polyester, die sich von Dicarbonsäuren und Diolen und/oder von Hydroxycarbonsäuren oder den entsprechenden Lactonen ableiten, wie Polyethylenterephthalat, Polybutylenterephthalat, Poly-1,4-dimethylolcyclohexan-terephthalat, Poly-(2,2-bis-(4-hydroxyphenyl)-propan)-terephthalat, Polyhydroxybenzoate, sowie Block-Polyether-ester, die sich von Polyethylen mit Hydroxyendgruppen, Dialkoholen und Dicarbonsäuren ableiten.
21. Polycarbonate und Polyestercarbonate.
22. Polysulfone, Polyethersulfone und Polyetherketone.
23. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
24. Trocknende und nicht trocknende Alkydharze.
25. Ungesättigte Polyesterharze, die sich von Copolyestem gesättigter und ungesättigter Dicarbonsäuren mit mehrwertigen Alkoholen, sowie Vinylverbindungen als Vemetzungsmittel ableiten, wie auch deren halogenhaltige, schwerbrennbare Modifikationen.
26. Vernetzbare Acrylharze, die sich von substituierten Acrylsäureestem ableiten, wie beispielsweise Epoxyacrylaten, Urethan-acrylaten oder Polyester-acrylaten.
27. Alkydharze, Polyesterharze und Acrylatharze, die mit Melaminharzen, Harnstoffharzen, Polyisocyanaten oder Epoxidharzen vernetzt sind.
28. Vernetzbare Epoxidharze, die sich von Polyepoxiden ableiten, beispielsweise von Bis-glycidylethern oder von cyctoaliphatischen Diepoxiden.
29. Natürliche Polymere, wie Cellulose, Naturkautschuk, Gelatine sowie deren polymerhomolog chemisch abgewandelte Derivate, wie Celluloseacetate, -propionate und -butyrate, oder Celluloseether, wie Methylcellulose.
30. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, PPE/HIPS, PPE/Polyamid-6.6 und Copolymere, PA/HDPE, PA/PP, PA/PPE.
31. Natürlich vorkommende und synthetische organische Stoffe, welche reine Monomere oder Mischungen von Monomeren sind, wie beispielsweise Mineralöle, tierische und pflanzliche Fette, Öle und Wachse, oder Öle, Fette und Wachse auf Basis synthetischer Ester oder Mischungen dieser Stoffe.
32. Wäßrige Dispersionen von Natur- oder Synthesekautschuk.

Bevorzugte Polymere sind Polyolefine wie beispielsweise Polyethylen verschiedener Dichte wie PE-LD, PE-MD, PE-HD, PE-LLD und Polypropylen, sowie Polystyrol und Polyvinylchlorid. Besonders bevorzugt sind die Polyolefine.

### Beispiele

### Herstellung von Prüfkörpern

PP-Pulver (MFI 230/5 ≈ 3 g/10 min) wurde mit den in den Tabellen angegebenen Mengen der Testsubstanzen in einem Mischer (Papenmeier, Type TLHK3) während der Mischzeit von 3 Minuten bei Umgebungstemperatur gemischt. Die Mischung wurde mittels Zweischneckenextruder (Leistriz) granuliert. Die Strangkühlung vor dem Granulieren erfolgte durch ein Wasserbad. Aus den so erhaltenen Granulaten wurden mit einer Spritzgußmaschine (Windsor SP 50; Zonen/Temperaturen: 1/200°C, 2/210°C, 3/210°C, 4/220°C) Platten spritzgegossen. Die Dicke der Platten betrug 1 mm.

### Prüfung der antistatischen Ausrüstung

Zur Beurteilung der Wirkung von Antistatika eignet sich die Messung des Oberflächenwiderstands nach DIN IEC (VDE 0303 Teil 30). Dabei wird der elektrische Widerstand auf der Oberfläche des Prüfkörpers mit einer speziellen Elektrode gemessen. Die meisten organischen Polymeren, wie die Polyolefine, haben von Natur aus Oberflächenwiderstände von ≥ 10¹⁵ Ω, entsprechend einem RO-Wert (= dekadischer Logarithmus des Oberflächenwiderstands) von RO ≥ 15. Formmassen bzw. daraus hergestellte Prüfkörper, die Oberflächenwiderstände kleiner als RO = 11 (10¹¹ Ω) aufweisen, gelten als gut antistatisch ausgerüstet. Als sehr gut werden Werte um RO = 9 angesehen.

Der Oberflächenwiderstand wurde mit einem Teraohmmeter der Firma Knick, Berlin, nach der Strom-Spannungsmethode gemessen. Die Meßspannung betrug 100 Volt. Der Meßbereich ist 10⁶-10¹⁵Ω. Die angegebenen Werte des Oberflächenwiderstands sind jeweils Mittelwerte aus mindestens sechs Einzelmeßwerten. Die Ergebnisse wurden aus dem Wert des Logarithmus des Oberflächenwiderstands gemittelt. Meßwerte,die oberhalb des Meßbereichs von 10¹⁵Ω lagen, wurden zur Mitteilung mit '15' gewertet. Es ergibt sich daraus, daß die angegebenen Mittelwerte, je näher sie zahlenmäßig an '15' heranreichen, physikalisch ungenau werden.

Die zweite, ebenfalls sehr aussagekräftige Methode, ist die Messung der Entladungs-Halbwertszeit. Bei dieser Methode wird der Effekt Aufladung/ Entladung der Oberfläche direkt erfaßt. Dazu wird die Zeit gemessen, in der eine auf die Oberfläche des Prüfkörpers aufgebrachte Ladung auf die Hälfte des Ausgangswertes abfällt. Gut sind Halbwertszeiten von 5 Sekunden. Sehr gut sind Werte von 1 Sekunde und darunter.

Analoges gilt für das Verfahren mit den Meßwerten zur Halbwertszeit. Die Halbwertszeit wurde über 60 Sekunden hinweg verfolgt. Meßergebnisse, bei welchen die Ladung innerhalb von 60 Sekunden nicht auf die Hälfte der Anfangsladung gefallen war, wurden in der Ergebnismitteilung mit '60' Sekunden gewichtet. Bei den angegebenen gemittelten Halbwertszeiten sind also Werte oberhalb etwa 40 Sekunden ungenau. Betrug die Halbwertszeit bei allen Messungen 60 Sekunden, d.h. das Ergebnis war gleich oder außerhalb des Meßbereiches von 60 Sekunden, dann wurden die Ergebnisse '> 60' gekennzeichnet. Meßwerte unter 1 Sekunde wurden in der Ergebnismitteilung als '1' gewertet, lagen alle Meßwerte unter 1 Sekunde, dann wurde das Ergebnis mit'> 1' angegeben.
Die Prüfkörper wurden während der angegebenen Lagerdauer und zur Messung in einem Raum mit Normklima (23°C bei 50 % rel. Luftfeuchte) gehalten.
Die folgende Tabelle zeigt die antistatische Wirkung jeweils eines Glycerinmonostearats und eines oxethylierten Talgfettamins sowie deren Mischung.

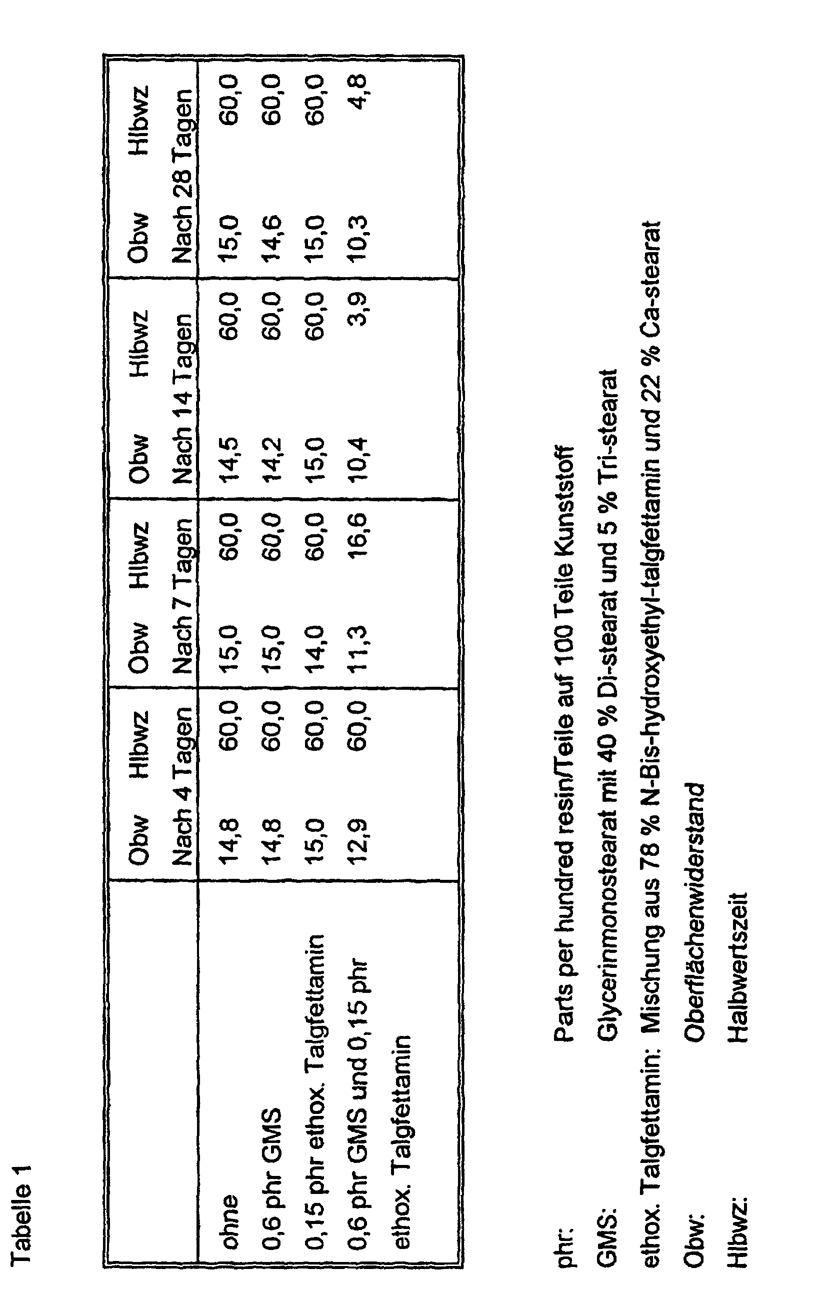

Die in dieser Tabelle angegebenen Werte zeigen, daß die Mischung der beiden Einzelkomponenten eine bessere Wirkung hat im Vergleich zu den Einzelkomponenten jeweils für sich, so daß man von einer synergistischen Wirkung sprechen kann.

Beschreibung der Konfektionsvorteile der Mischung anhand des Backtests:

Es wurden GMS und ethoxylierte Amine auf verschiedene Arten gemischt und das Agglomerisationsverhalten durch den Backtest geprüft.
Der Backtest dient zur Charakterisierung des Verklumpungsverhaltens von pulverförmigen oder anderen zerkleinerten Materialien. Dazu werden 50 g des zu prüfenden Materials in einen Glaszylinder (Innenradius*Höhe = 27*100 mm), der auf einer Petrischale steht, eingewogen. Anschließend wird eine Kartonplatte mit dem Innendurchmesser des Glaszylinders (ø 53 mm) aufgelegt und diese mit einem Stempel von 2.0 Kg Masse unter Druck gesetzt. Das Ganze wird 24 Stunden unter vorgegebenen Bedingungen (Temperatur, Klima) gelagert. Nach dem Konditionieren der Probe auf die Meßtemperatur bzw. das Prüfklima, wird der Glaszylinder vorsichtig nach oben abgezogen und die Kartonplatte entfernt, so daß das Probenmaterial in Form eines Vollzylinders auf der Petrischale stehenbleibt. Die Petrischale wird auf den Querbalken der Biegefestigkeitsmaschine (TYP Z 423, ZWICK) gestellt und nach oben bewegt, bis die Spitze des Druckkegels die Oberfläche der Prüfmasse gerade berührt. Mit dem Vorschub von 17 [mm/min] wird die Probe gegen den Druckkegel bewegt und die auftretende Kraft registriert. Die gemessene Maximalkraft (Fmax), die auf den Druckkegel beim Eindringen in die Probenmasse wirkt, dient als Maß zum Vergleich der Neigungen verschiedener Materialien zu kompaktieren - sprich zusammenzubacken.

Tabelle 2 zeigt die Resultate des Backtests. Die Zahlenwerte in der Tabelle geben die Druckkraft in [N] wieder, die notwendig ist, die aus den Mischungen gepreßte Tabletten zu zerdrücken.
V1 ist die Mischung aus N-bis-hydroxyethyl-Talgfettamin (55 Gew.-%) mit Calciumstearat (45 Gew.-%) die durch eine physikalische Pulvermischung aus Calciumstearat und dem Stoff V2 (s. unten) hergestellt wurde.
V2 ist die Mischung aus N-bis-hydroxyethyl-Talgfettamin (78 Gew.-%) und Calciumstearat (22 Gew.-%) als gesprühte, pulverförmige Schmelzemischung.

A1 ist die Mischung aus N-bis-hydroxyethyl-Talgfettamin (39 Gew.-%) mit Glycerinmonostearat (GMS) (50 Gew.-%) und Calciumstearat (11 Gew.-%), hergestellt durch Pulvermischen von Stoff V2 und GMS.

A2 ist die Mischung aus N-bis-hydroxyethyl-Talgfettamin (26 Gew.-%) mit GMS (66,6 Gew.-%) und Calciumstearat (7,3 Gew.-%), hergestellt durch Pulvermischen von Stoff V2 und GMS.

A3 ist die Mischung aus N-bis-hydroxyethyl-Talgfettamin (15,6 Gew.-%) mit GMS (80 Gew.-%) und Calciumstearat (4,4 Gew.-%), hergestellt durch Pulvermischen von Stoff V2 und GMS.

A3' ist die Mischung aus N-bis-hydroxyethyl-Talgfettamin (15,6 Gew.-%) mit GMS (80 Gew.-%) und Calciumstearat (4,4 Gew.-%), hergestellt durch Granulieren der Schmelzemischung von Stoff V2 und GMS in einer Schneidmühle.

A3" ist die Mischung aus N-bis-hydroxyethyl-Talgfettamin (15,6 Gew.-%) mit GMS (80 Gew.-%) und Calciumstearat (4,4 Gew.-%), hergestellt durch Versprühen der Schmelzemischung von Stoff V2 und GMS.

A3a ist die Mischung aus N-bis-hydroxyethyl-Talgfettamin (20 Gew.-%) mit GMS (80 Gew.-%) hergestellt durch Versprühen der Schmelzemischung von Stoff S2 und GMS.

A4 ist die Mischung aus N-bis-hydroxyethyl-Talgfettamin (20 Gew.-%) mit GMS (80 Gew.-%) hergestellt durch Granulieren der Schmelzemischung von ethoxyliertem N-Bis-hydroxyethyl-Talgfettamin und GMS in einer Schneidmühle.

A4' ist die Mischung aus N-bis-hydroxyethyl-Cocosfettamin (20 Gew.-%) mit GMS (80 Gew.-%) hergestellt durch Versprühen der Schmelzemischung von ethoxoxyliertem Cocosfettamin und GMS.

### S1 ist GMS

### S2 ist N-bis-hydroxyethyl-Cocosfettamin

**Tabelle 2:**

| Backtest mit Mischungen | | | | | | |
|---|---|---|---|---|---|---|
| Die Zahlenwerte in der Tabelle geben die Druckkraft in [N] wieder, die notwendig ist, die aus den Mischungen gepreßte Tabletten zu zerdrücken. | | | | | | |

| Prüftemperaturen [°C] | | | | | | Tropfpunkt [°C] |
|---|---|---|---|---|---|---|
| | 30 | 35 | 40 | 45 | 50 | |
| S1 | -- | 1,0 | 5,8 | -- | -- | ca. 58 |
| S2 | -- | 170 | 275 | -²⁾ | -²⁾ | ca. 45 |
| V1 | -- | -- | 7,9 | 33,4 | 65,0 | ca. 97 |
| V2 | >100¹⁾ | >100 | -- | -- | -- | ca. 90 |
| A1 | 34,3 | -- | 79,0 | -- | -- | -- |
| A2 | 22,6 | -- | 32,9 | -- | -- | -- |
| A3 | 6,4 | -- | 9,32 | -- | -- | -- |
| A3' | -- | -- | 8,3 | 11,8 | 61,3 | ca. 82 |
| A3" | -- | 4,5 | -- | 39,0 | -- | ca. 58* |
| A3a | -- | 46,0 | 71,0 | 130,0 | 132,0 | ca.54* |
| A4 | -- | -- | 9,3 | 30,4 | >100 | ca. 52 |

| | | | | | | |
|---|---|---|---|---|---|---|
| -- nicht geprüft * Erstarrungspunkt | | | | | | |
| ¹⁾ bei 33°C | | | | | | |
| ²⁾ geschmolzen | | | | | | |

Wie der Tabelle 2 zu entnehmen ist, zeigen die Wirkstoffe einzeln eine unbefriedigende Lager- und Formstabilität.
Entweder zerfließen sie bei leicht erhöhten Temperaturen oder backen unter Druck sehr leicht zusammen. In beiden Fällen werden massive, für Anwender nicht verwendbare Körper erhalten.
Eine Zumischung von Ca-Stearat verbessert dieses Verhalten geringfügig. Erst ab fast 50 % Ca-Stearat ist jedoch eine akzeptable Form- und Lagerstabilität erreichbar.
Hier zeigen die Mischungen aus den Wirkstoffen erhebliche Vorteile.

Herstellmethode der Mischungen

### (I) Herstellung der Additiv-Mischungen

### a) Als physikalische Pulvermischung

Die angegebenen Komponenten wurden als Pulver in einen Mischer (Diosna Typ V25, Dierks & Söhne) gegeben und 5 min gemischt. Zur Prüfung des Kompaktierverhaltens mit dem Backtest wurden die Anteile mit einer Körnung > 2 [mm] abgesiebt.

### b) Als Schmelzemischung

Schmelzemischungen aus den angegebenen Additiven wurden in einem 2I-Erlenmayr-Kolben mit Heizplatte/Öl-Heizbad/Kontaktthermometer und Rührwerk hergestellt, indem das alkoxylierte Amin in die GMS Schmelze eingerührt wurde. (Bei der Mischung von Hostastat FE 2 und Hostastat FA 14 wurde bei einer Temperatur von 80-90°C eine klare Schmelze erhalten). die Schmelzen wurde nach der etwa 3 min dauernden Mischzeit in eine Blechschale entleert und bei Raumtemperatur erkalten lassen. Zum Zerkleinern wurde der so erhaltene Block erst grob zerkleinert und dann mit flüssigem Stickstoff gekühlt, um die erhaltene Masse mit einer Schneidmühle zerkleinern zu können.

### c) Als Sprühpulver

Es wurden Schmelzemischungen wie unter b) hergestellt und diese Mischungen wenige Grade über der Erstarrungstemperatur (ET) gehalten. Gesprüht wurde bei einer Lufttemperatur von ca. 15 [°C] mit einer Laborsprühanlage der Fa. Prölls, Bopfingen.

## Patentansprüche

1. Feste, lagerstabile, antistatische Mischung, bestehend aus alkoxylierten Aminen der Formel (I) und Fettsäureglyceriden der Formel (II)
R¹-N-[(CₙH₂ₙ)-OH)₂ (I) 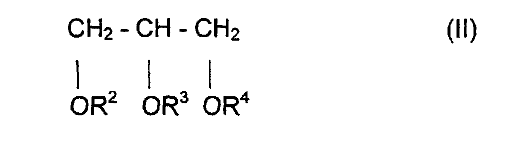
worin
n 2 oder 3
R¹ C₈-C₂₂-Alkyl oder -Alkenyl oder C₈-C₂₂-Alkyl-CO- ist und
R², R³ und R⁴ gleich oder verschieden sein können und C₈-C₂₂-Alkyl-CO oder -Alkenyl-CO und zwei dieser Reste auch Wasserstoff darstellen,
und wobei das Mischungsverhältnis der Verbindungen der Formeln I und II 4:1 bis 1:10 Gewichtsteile beträgt.

2. Mischung nach Anspruch 1, **dadurch gekennzeichnet, daß** n 2, R¹ C₁₂-C₁₈-Alkyl oder -Alkenyl oder C₁₂-C₁₈-Alkyl-CO- ist und R², R³ und R⁴ gleich oder verschieden sind und Wasserstoff oder C₁₂-C₁₈-Alkyl-CO darstellen.

3. Mischung nach Anspruch 1,**dadurch gekennzeichnet, daß** n 2, R¹ und jeweils ein Rest R², R³ oder R⁴ gleich sind und C₈-C₂₂-Alkyl-CO oder -Alkenyl-CO darstellen und die beiden anderen Reste R², R³ oder R⁴ Wasserstoff darstellen.

4. Mischung nach Anspruch 1, **dadurch gekennzeichnet, daß** n 2, R¹ und jeweils ein Rest R², R³ oder R⁴ gleich sind und C₁₂-C₁₈-Alkyl-CO oder -Alkenyl-CO darstellen und die beiden anderen Reste R², R³ oder R⁴ Wasserstoff darstellen.

5. Mischung nach Anspruch 1, wobei das Mischungsverhältnis der Verbindungen der Formeln I und II 1:2 bis 1:6 Gewichtsteile beträgt.

6. Mischung nach Anspruch 1, wobei das Mischungsverhältnis der Verbindungen der Formeln I und II 1:3,5 bis 1:4,5 Gewichtsteile beträgt.

7. Verwendung der Mischung nach Anspruch 1 als antistatisches Additiv für Kunststoffe.

8. Verfahren zur Herstellung von festen, antistatischen Mischungen von Kunststoffadditiven nach mindestens einem der Ansprüche 1 bis 6, **dadurch gekennzeichnet, daß** alkoxylierte Fettamine der Formel (I) mit flüssigen oder wachsartigen Fettsäureglyceriden der Formel (II) im Verhältnis 4:1 bis 1:10 Gewichtsteilen gemischt und bei Bedarf weiteren Verfahrensschritten unterzogen werden.

9. Verfahren nach Anspruch 8, **dadurch gekennzeichnet, daß** die Komponenten der Formel (I) und (II) bis zur homogenen Schmelze erhitzt und als Sprühpulver weiterverarbeitet werden.

10. Verfahren nach Anspruch 8, **dadurch gekennzeichnet, daß** die Schmelze der Komponenten (I) und (II) nach dem Abkühlen in einer Schneidmühle, mit Extruder, im Kollergang mit Lochplatte, über Schuppenwalze oder Tropfband zerkleinert werden.

## Claims

1. A solid, storage-stable antistatic mixture composed of alkoxylated amines of the formula (I) and fatty acid glycerides of the formula (II)
R₁-N-[(CₙH₂ₙ)-OH]₂ (I) 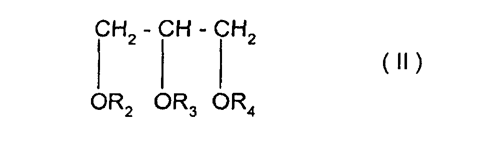
where
n is 2 or 3
R₁ is C₈-C₂₂-alkyl or -alkenyl or C₈-C₂₂-alkyl-CO- and
R₂, R₃ and R₄ may be identical or different and C₈-C₂₂-alkyl-CO or -alkenyl-CO and two of these radicals are also hydrogen,
and where the mixing ratio of the compounds of formulae I and II is from 4:1 to 1:10 parts by weight.

2. A mixture as claimed in claim 1, wherein n is 2, R₁ is C₁₂-C₁₈-alkyl or -alkenyl or C₁₂-C₁₈-alkyl-CO- and R₂, R₃ and R₄ are identical or different and are hydrogen or C₁₂-C₁₈-alkyl-CO.

3. A mixture as claimed in claim 1, wherein n is 2, R₁ and, in each case, one of the radicals R₂, R₃ or R₄ are identical and are C₈-C₂₂-alkyl-CO or -alkenyl-CO, and the two other radicals R₂, R₃ or R₄ are hydrogen.

4. A mixture as claimed in claim 1, wherein n is 2, R₁ and, in each case, one of the radicals R₂, R₃ or R₄ are identical and are C₁₂-C₁₈-alkyl-CO or -alkenyl-CO, and the two other radicals R₂, R₃ or R₄ are hydrogen.

5. A mixture as claimed in claim 1, wherein the mixing ratio of the compounds of the formulae I and II is from 1:2 to 1:6 parts by weight.

6. A mixture as claimed in claim 1, wherein the mixing ratio of the compounds of the formulae I and II is from 1:3.5 to 1:4.5 parts by weight.

7. The use of a mixture as claimed in claim 1 as antistatic additive for plastics.

8. A process for preparing solid, antistatic mixtures of additives for plastics as claimed in at least one of claims 1 to 6, which comprises mixing alkoxylated fatty amines of the formula (I) with liquid or waxy fatty acid glycerides of the formula (II) in a ratio of from 4:1 to 1:10 parts by weight and, if necessary, subjecting the fatty amines to further process steps.

9. The process as claimed in claim 8, wherein the components of formula (I) and (II) are heated until they give a homogeneous melt and are further processed as sprayed powder.

10. The process as claimed in claim 8, wherein the melt of the components (I) and (II) are comminuted after cooling in a pelletizer, with extruder, in an edge-runner mixer with perforated plate, or via a flaking roll or drop belt.

## Revendications

1. Mélange antistatique solide, stable au stockage, constitué d'amines alcoxylées de formule (I) et de glycérides d'acides gras de formule (II)
R¹-N-[(CₙH₂ₙ)-OH]₂ (I) 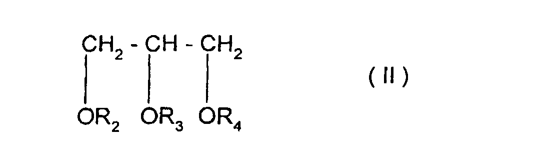
dans lesquelles
n signifie 2 ou 3,
R¹ signifie un groupe alkyle ou alcényle en C₈-C₂₂ ou un groupe (alkyle en C₈-C₂₂)-CO- et
les symboles R², R³ et R⁴, qui peuvent être identiques ou différents, représentent un groupe (alkyle en C₈-C₂₂)-CO- ou (alcényle en C₈-C₂₂)-CO- et deux de ces symboles également l'hydrogène,
et dans lequel le rapport de mélange des composés de formules (I) et (II) est compris entre 4:1 et 1:10 parties en poids.

2. Mélange selon la revendication 1, **caractérisé en ce que** n signifie 2, R¹ signifie un groupe alkyle ou alcényle en C₁₂-C₁₈ ou un groupe (alkyle en C₁₂-C₁₈)-CO- et les symboles R², R³ et R⁴ sont identiques ou différents et représentent l'hydrogène ou un groupe (alkyle en C₁₂-C₁₈)-CO-.

3. Mélange selon la revendication 1, **caractérisé en ce que** n signifie 2, le symbole R¹ et, dans chaque cas, un des symboles R², R³ ou R⁴ sont identiques et représentent un groupe (alkyle en C₈-C₂₂)-CO- ou (alcényle en C₈-C₂₂)-CO- et les deux autres symboles R², R³ ou R⁴ représentent l'hydrogène.

4. Mélange selon la revendication 1, **caractérisé en ce que** n signifie 2, le symbole R¹ et, dans chaque cas, un des symboles R², R³ ou R⁴ sont identiques et représentent un groupe (alkyle en C₁₂-C₁₈)-CO- ou (alcényle en C₁₂-C₁₈)-CO- et les deux autres symboles R², R³ ou R⁴ représentent l'hydrogène.

5. Mélange selon la revendication 1, dans lequel le rapport de mélange des composés de formules (I) et (II) est compris entre 1:2 et 1:6 parties en poids.

6. Mélange selon la revendication 1, dans lequel le rapport de mélange des composés de formules (I) et (II) est compris entre 1:3,5 et 1:4,5.

7. Utilisation du mélange selon la revendication 1, comme additif antistatique pour les matières plastiques.

8. Procédé de préparation de mélanges antistatiques solides d'additifs pour matières plastiques selon au moins une des revendications 1 à 6, **caractérisé en ce qu'**on mélange des amines grasses alcoxylées de formule (I) avec des glycérides d'acides gras liquides ou cireux de formule (II) dans un rapport de 4:1 à 1:10 parties en poids et, si nécessaire, on soumet le mélange à des étapes ultérieures de traitement.

9. Procédé selon la revendication 8, **caractérisé en ce que** les composants de formules (I) et (II) sont chauffés jusqu'à formation d'une masse fondue homogène et sont traités ultérieurement sous forme d'une poudre obtenue par pulvérisation.

10. Procédé selon la revendication 8, **caractérisé en ce que** la masse fondue des composants (I) et (II) est réduite, après refroidissement, en fines particules dans un broyeur, avec extrudeur, dans un granulateur à coupe chaude avec plaque de répartition perforée, sur une calandre ou sur une bande enrouleuse.
